# EUROPÄISCHE PATENTSCHRIFT

(11) **EP 0 942 221 B1**
(45) Veröffentlichungstag und Bekanntmachung des Hinweises auf die Patenterteilung: **14.01.2004**
(21) Anmeldenummer: 99103334.1
(22) Anmeldetag: 20.02.1999
(51) Int. Cl.: F16M 11/04, B60R 11/02, F41H 7/02

(54) **Konsole zur Halterung eines Arbeitsgerätes, insbesondere eines Bildschirmgerätes im Innenraum eines Fahrzeugs, insbesondere eines Kampffahrzeugs**
Holder for supporting an apparatus, particularly a video display inside a vehicle, particularly a combat vehicle
Console de maintien d'un appareil, en particulier un écran de l'intérieur d'un véhicule, en particulier un véhicule de combat

(30) Priorität: 09.03.1998 DE 19810021
(43) Veröffentlichungstag der Anmeldung: 15.09.1999
(73) Patentinhaber: Krauss-Maffei Wegmann GmbH & Co. KG, 34127 Kassel (DE)
(72) Erfinder: Grünewald, Jens, Dipl.-Ing., 34131 Kassel (DE)
(74) Vertreter: Feder, Wolf-Dietrich, Dr. Dipl.-Phys.

(56) Entgegenhaltungen:
- EP-A- 0 312 355
- DE-A- 4 007 011
- DE-C- 4 120 260
- DE-U- 29 805 542
- US-A- 4 964 606

## Beschreibung

Die Erfindung betrifft eine bewegbare Konsole zur Halterung eines Bildschirmgerätes im Innenraum eines Kampffahrzeugs, mit zwei nebeneinander angeordneten Bedienungsplätzen, in deren Bereich die Konsole zur abwechselnden Bedienung des Bildschirmgerätes bewegbar ist.

In Kampffahrzeugen ist bekanntlich der Raum für die Unterbringung sowohl von Personen als auch von Arbeitsgeräten außerordentlich begrenzt. Es muß daher dafür Sorge getragen werden, daß Arbeitsgeräte äußerst platzsparend und in nicht zu großer Anzahl im Innenraum des Fahrzeugs installiert werden. So ist beispielsweise bei einem leichten Kettenfahrzeug die Möglichkeit vorgesehen, daß außer dem Kommandant des Fahrzeugs, beispielsweise im Übungseinsatz, auch der Kommandeur im Fahrzeug anwesend ist, wobei beide ein zu einem Rechner gehörendes Bildschirmgerät zu bedienen haben. Aus Platzgründen soll dieses Bildschirmgerät nur einmal im Fahrzeug vorhanden sein und es soll von den beiden Bedienungspersonen abwechselnd bedienbar sein. Da ein ständiger Platzwechsel im engen Innenraum des Fahrzeugs nicht möglich ist, soll das Bildschirmgerät zwischen den beiden Bedienungsplätzen des Fahrzeugs hin- und herbewegbar sein, wobei nicht nur der enge Innenraum des Fahrzeugs und die festgelegte Anordnung anderer Bauteile und Geräte in Betracht gezogen werden müssen, sondern auch ergonomische Gesichtspunkte eine Rolle spielen, wie beispielsweise die Abstände und Sichtwinkel der Bedienungspersonen zum Bildschirmgerät.

In dem Dokument EP-A-312 355 ist ein Aufhängesystem für Personalcomputer und Monitore beschrieben, bei dem ein Bildschirmgerät an einer bewegbaren Konsole aufgehängt ist und das eine an einer festen Konsole befestigte Linear-Laufrollenschiene besitzt, die in einer ersten horizontalen Richtung verläuft, und auf der ein Schlitten geführt ist, wobei im Bereich unterhalb des Schlittens eine Konsolenplattform angeordnet ist, die mit dem Schlitten über eine bewegliche Führungsvorrichtung derart verbunden ist, daß sie in einer horizontalen Ebene unter dem Schlitten hinweg in einer Schwenkbewegung vor und zurückbewegbar ist, und an der um eine vertikale Achse schwenkbar ein das Bildschirmgerät tragender Rahmen aufgehängt ist.

Ob und wie dieses bekannte System unter den besonders engen Raumverhältnissen im Innenraum eines Kampffahrzeuges einsetzbar sein könnte, ist in diesen Dokumenten nicht geoffenbart.

Der Erfindung liegt die Aufgabe zugrunde, eine bewegbare Konsole zur Halterung eines Bildschirmgerätes der oben angegebenen Art so auszubilden, daß sie auf engstem Raum im Innenraum eines Kampffahrzeugs installierbar ist und die in ihrer Konstruktion so einfach und flexibel ist, daß sie an alle räumlichen Bedingungen im Innenraum und an ergonomische Forderungen leicht anpaßbar ist.

Die Lösung dieser Aufgabe geschieht erfindungsgemäß mit den Merkmalen des Patentanspruchs 1. Vorteilhafte Weiterbildungen der Erfindung sind in den abhängigen Ansprüchen beschrieben.

Der Grundgedanke der Erfindung besteht darin, die Konsole an der Decke des Fahrzeuginnenraums derart aufzuhängen, daß das Arbeitsgerät einerseits in einer ersten horizontalen Richtung zwischen den beiden Bedienungsplätzen hin- und hergeschoben werden kann und andererseits in einer zweiten horizontalen Richtung, die orthogonal zur ersten horizontalen Richtung verläuft, aus einer Arbeitsposition in eine Zurrposition bewegt werden kann, in der es in platzsparender Weise, beispielsweise in einer Nische des Innenraums, untergebracht werden kann.

Im Prinzip könnte auch die Bewegung in der zweiten horizontalen Richtung durch Anordnung einer zweiten Laufrollenschiene bewirkt werden. In vielen Fällen ist dies aber aus Platzgründen nicht möglich. Deshalb wird gemäß einer besonders vorteilhaften, in Patentanspruch 3 beschriebenen Ausführungsform, die Führungsvorrichtung zwischen der Konsolenplattform und dem Schlitten mit zwei Kniehebelpaaren ausgebildet mit denen, wie weiter unten anhand eines Ausführungsbeispiels genauer erläutert, in sehr platzsparender Weise eine Bewegung, beispielsweise eines Bildschirmgerätes aus der Arbeitsposition in eine Zurrposition, erreicht werden kann.

Bei dieser Ausführungsform kann es weiterhin vorteilhaft sein, wenn die mit dem Kniehebelpaar aufgebaute bewegliche Führungsvorrichtung durch eine Geradführungsvorrichtung ergänzt wird, wie sie beispielsweise in Patentanspruch 11 beschrieben ist.

Im folgenden wird anhand der beigefügten Zeichnungen ein Ausführungsbeispiel der erfindungsgemäßen Konsole näher erläutert.

In den Zeichnungen zeigen:
Fig. 1 in einem Querschnitt durch den Innenraum eines nur angedeuteten Kampffahrzeugs, den Bedienungsplatz eines an einer Schiebekonsole aufgehängten Bildschirmgerätes in Seitenansicht mit einer Arbeitsposition und einer Zurrposition des Bildschirmgerätes;
Fig. 2 in einer Aufsicht auf den Innenraum des Kampffahrzeugs zwei nebeneinander liegende Bedienungsplätze mit einem an einer Schiebekonsole aufgehängten Bildschirmgerät in zwei Arbeitspositionen und einer Zurrposition;
Fig. 3 die Schiebekonsole gemäß Fig. 1 und 2 in einer Frontansicht aus der Richtung der Bedienungsplätze in den in Fig. 2 dargestellten zwei Arbeitspositionen und der Zurrposition;
Fig. 4 in einer gegenüber Fig. 1 vergrößerten Teildarstellung die Schiebekonsole nach Fig. 1 bis 3 in drei unterschiedlichen Positionen ihrer Bewegung aus der Arbeitsposition in die Zurrposition;
Fig. 5 in einer Teildarstellung analog Fig. 4 die Schiebekonsole in Draufsicht in den in Fig. 4 dargestellten Positionen der Bewegung;
Fig. 6 in Teildarstellung analog Fig. 4 die Schiebekonsole nach den Fig. 4 und 5 in einer Frontansicht aus der Richtung der Bedienungsplätze;
Fig. 7 eine Variante der Schiebekonsole nach Fig. 1 bis 6 in einer Draufsicht.

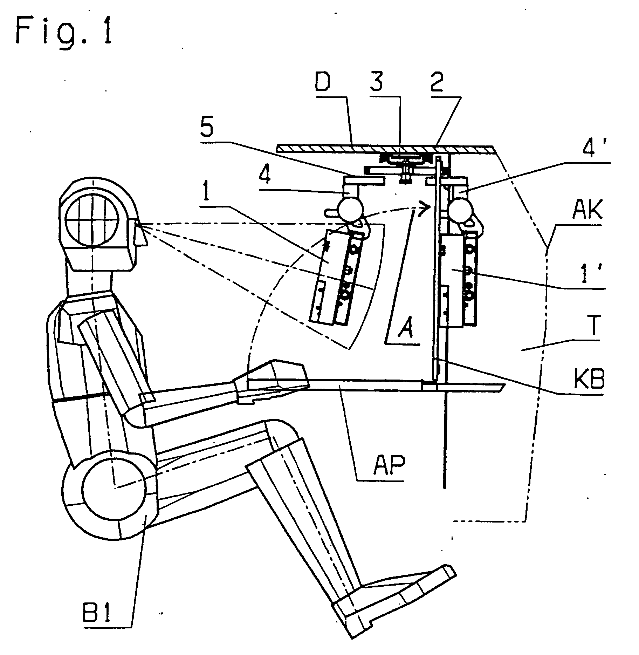

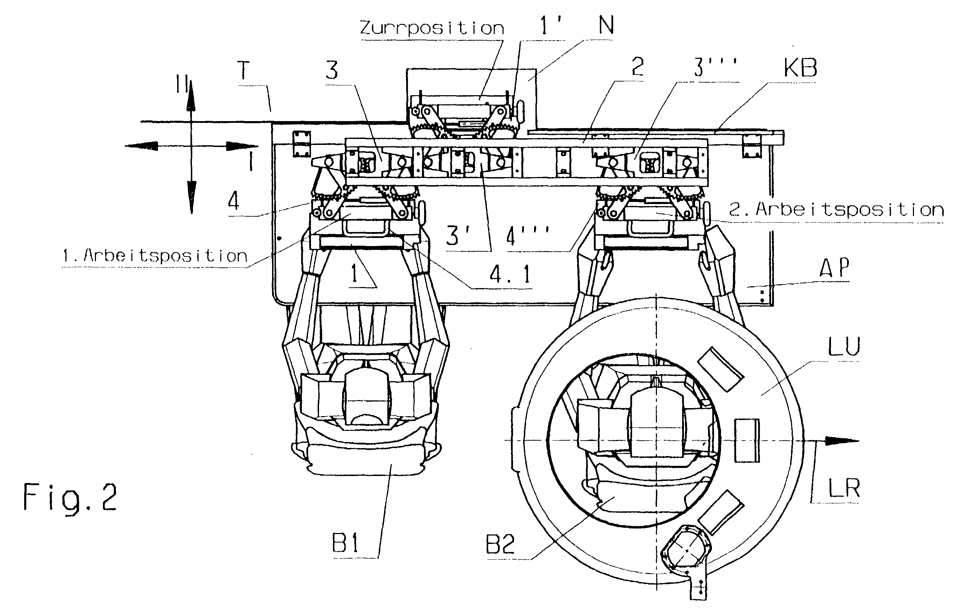

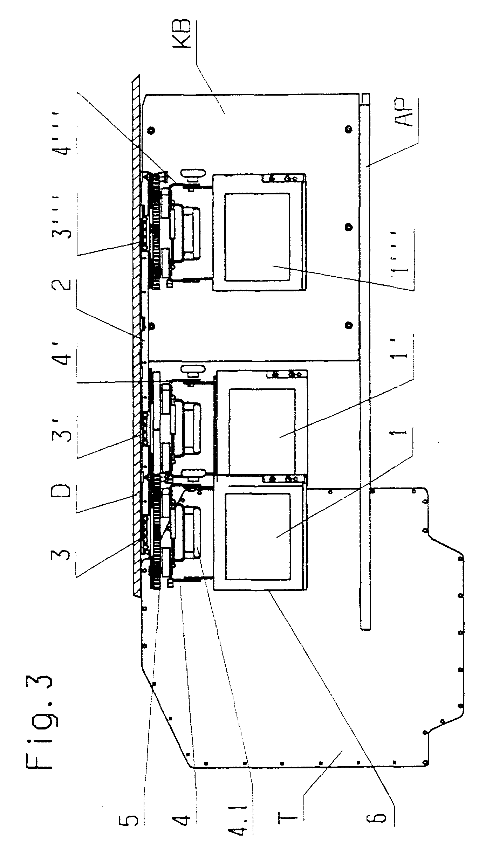

In den Fig. 1 bis 3 ist ein Teil des Innenraums eines Kampffahrzeugs dargestellt, von dem lediglich ein Teil der Dachplatte D mit einer Luke LU (Fig. 2) angedeutet ist, sowie ein Teil der Außenkontur AK, hinter der in der Seitenwand der Tank T angeordnet ist. Die Längsrichtung des Fahrzeugs ist mit LR bezeichnet. In dem dargestellten Teil des Innenraums sind zwei Bedienungsplätze B1 und B2 so angeordnet, daß die Bedienungspersonen quer zur Längsrichtung LR sitzen. Vor den Bedienungsplätzen ist eine in Pfeilrichtung A hochklappbare Arbeitsplatte AP angeordnet, hinter der sich ein Kartenbrett KB befindet.

Die Bedienungspersonen auf den Bedienungsplätzen B1 und B2 sollen abwechselnd in der Lage sein, einen Rechner zu bedienen, der im einzelnen nicht dargestellt ist und beispielsweise ein fest installiertes Grundgerät und eine auf der Arbeitsplatte AP liegende Tastatur besitzen kann und der mit einem Bildschirmgerät ausgerüstet ist, das in den Fig. 1 bis 3, je nachdem, ob es sich vor dem ersten Bedienungsplatz B1, in einer Zurrposition oder vor dem zweiten Bedienungsplatz B2 befindet mit 1, 1' bzw. 1"' bezeichnet ist. Dieses Bildschirmgerät soll zwischen den beiden Bedienungsplätzen B1 und B2 hin und herschiebbar sein, damit die beiden Bedienungspersonen abwechselnd daran arbeiten können und es soll außerdem, wenn es nicht gebraucht wird, in eine Zurrposition 1' bewegbar sein, in der es in eine Nische N zurückgeschoben ist, die im Bereich der Außenwand neben dem Tank T vorhanden ist.

Um dies zu erreichen, soll das Bildschirmgerät 1 in einer ersten horizontalen Richtung I zwischen den beiden Bedienungsplätzen B1 und B2 hin- und herschiebbar sein. Weiterhin soll es in einer zweiten horizontalen Richtung II, die orthogonal zur ersten Richtung I verläuft, nach hinten verschiebbar sein, damit es in die zwischen den beiden Arbeitspositionen liegende Zurrposition nach hinten geschoben werden kann.

Um dies zu erreichen, ist an der Innenseite der Dachplatte D, also an der Decke des Innenraums eine Linear-Laufrollenschiene 2 befestigt, die parallel zur Längsrichtung LR des Fahrzeugs vom Bedienungsplatz B1 zum Bedienungsplatz 32 verläuft. Auf der Linear -Laufrollenschiene 2 ist ein Schlitten geführt, der in den verschiedenen in Fig. 1 bis 3 dargestellten Positionen mit 3, 3 ' und 3 "' bezeichnet ist. Unterhalb des Schlittens 3 befindet sich eine Konsolenplattform 4 (bzw. 4', 4"'), an der das Bildschirmgerät 1 (1', 1"') in einem Rahmen 6 aufgehängt ist. Der Rahmen 6 ist um eine horizontale Achse schwenkbar, so daß das Bildschirmgerät 1, wie in Fig. 1 dargestellt, auf den optimalen Sichtwinkel eingestellt werden kann.

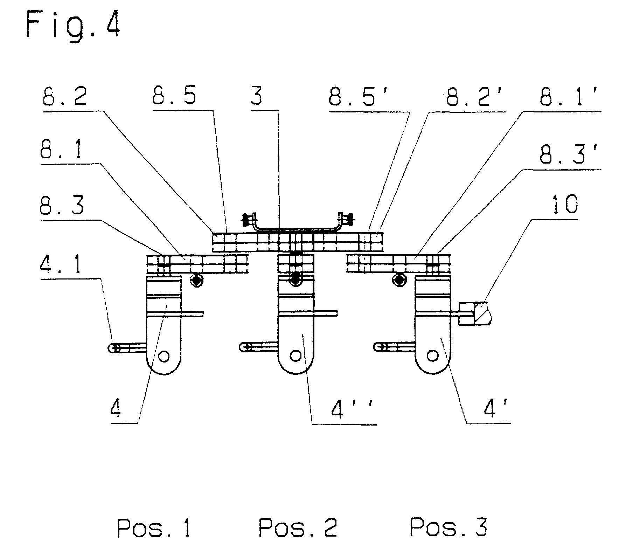

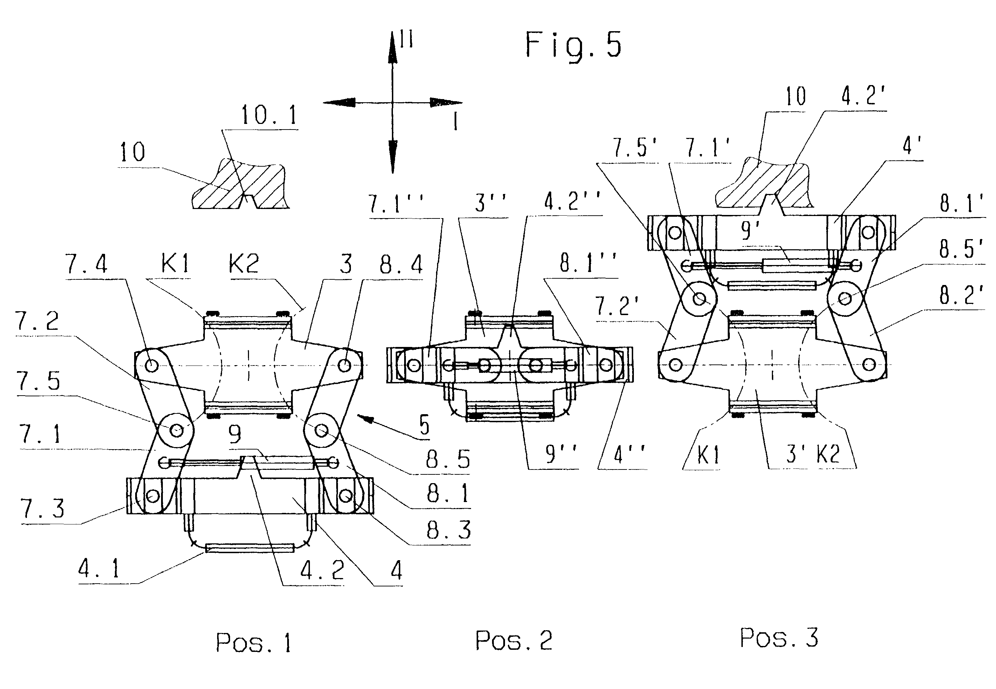

Die Konsolenplattform 4 ist mit dem Schlitten 3 über eine bewegliche Führungsvorrichtung verbunden, die in den Fig. 1 bis 3 allgemein mit 5 bezeichnet ist und weiter unten anhand der Fig. 4 bis 6 genauer erläutert wird. Zum Wechseln der Position des Bildschirmgerätes 1 aus der ersten Arbeitsposition in die zweite Arbeitsposition (1"') wird dieses unter Benutzung des Handgriffs 4.1 zusammen mit dem Schlitten 3 entlang der Linear-Laufrollenschiene 2 in Richtung I soweit verschoben, bis Schlitten 3"' und Bildschirmgerät 1"' sich in der zweiten Arbeitsposition vor dem Bedienungsplatz B2 befinden. Zur Bewegung in die Zurrposition wird das Bildschirmgerät 1 zusammen mit dem Schlitten 3 nur ein Stück weit in Richtung I verschoben, bis sich der Schlitten 3' gegenüber der Nische N befindet. Dann wird das Bildschirmgerät 1 in Richtung II nach hinten geschoben, bis sich das Bildschirmgerät 1' innerhalb der Nische N befindet, wo es, wie weiter unten näher erläutert, in eine Zurrvorrichtung einrastet.

Im folgenden wird anhand der Fig. 4 bis 6 die Führungsvorrichtung 5 zwischen Konsolenplattform 4 und Schlitten 3 näher beschrieben.

Die Fig. 4 bis 6 zeigen die Konsolenplattform 4 und den Schlitten 3 mit der sie verbindenden Führungsvorrichtung 5 in den Positionen 1, 2 und 3, wobei davon ausgegangen wird, daß der Schlitten 3 bereits in Richtung I soweit verschoben wurde, daß er sich unmittelbar gegenüber der Zurrposition (siehe Fig. 2) befindet.

Die Bezugsziffern sind in den Positionen 1 bis 3 in den Fig. 4 bis 6 zur besseren Unterscheidung mit 3, 3'' und 3' (siehe auch Fig. 2) bzw. 4, 4'', 4' usw. bezeichnet.

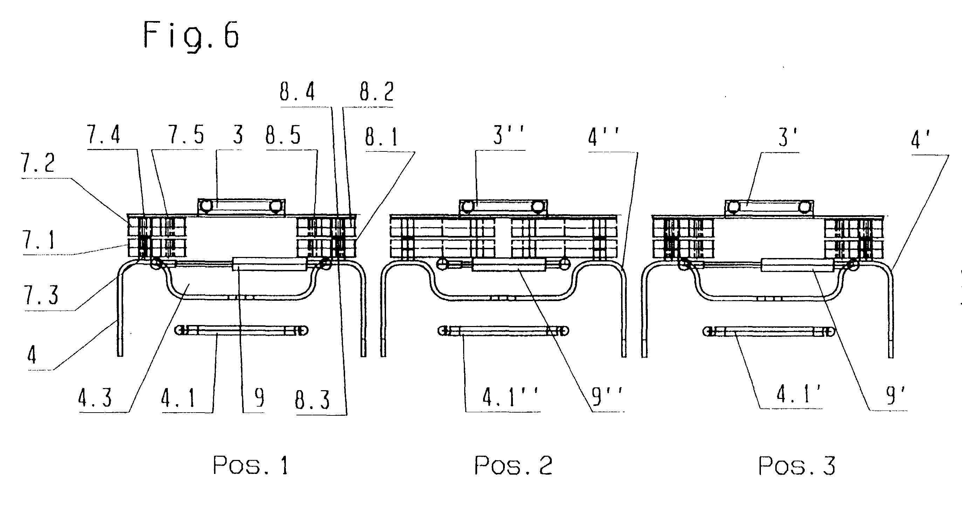

Wie aus den Fig. 4 bis 6 zu erkennen, besitzt die Führungsvorrichtung 5 zwei Kniehebelpaare 7.1-7.2 und 8.1-8.2, die einander spiegelsymmetrisch zur Quermittelebene von Konsolenplattform 4 und Schlitten 3 gegenüberliegend zwischen dem Schlitten 3 und der Konsolenplattform 4 derart angeordnet sind, daß die Achsen ihrer Gelenke 7.3, 7.4, 7.5 bzw. 8.3, 8.4, 8.5 senkrecht zu der durch die horizontalen Richtungen I und II aufgespannten Ebene stehen. Die einen Hebel 7.1 und 8.1 der Kniehebelpaare sind über die Gelenke 7.3 und 8.3 mit der Konsolenplattform 4 und die anderen Hebel 7.2 bzw. 8.2 über die Gelenke 7.4 und 8.4 mit dem Schlitten 3 schwenkbar verbunden. Der Hebel 7.1 ist über das Kniegelenk 7.5 mit dem Hebel 7.2 und der Hebel 8.1 über das Kniegelenk 8.5 mit dem Hebel 8.2 verbunden. Wie den Fig. 4 und 6 zu entnehmen, liegen die Hebel 7.1 und 8.1 einerseits sowie 7.2 und 8.2 andererseits in unterschiedlichen Ebenen, so daß sie beim Verschwenken übereinander und über der Konsolen-plattform 4 sowie unter dem Schlitten 3 hinweggleiten können.

Die beiden Hebel 7.1 und 8.1 sind über eine Gasfeder 9 miteinander gekoppelt. Diese Gasfeder 9 hat die Tendenz, die beiden Hebel 7.1 und 8.1 auseinander zu drücken und definiert im ausgefederten Zustand die Endlagen der Konsolenplattform 4 in den Positionen 1 und 3.

Die Funktionsweise dieser Führungsvorrichtung 5 ist folgende:

Wenn man ausgehend von der Position 1, in welcher das Bildschirmgerät 1 vor dem Schlitten 3 liegt, dieses in Richtung II nach hinten schiebt, werden die Kniehebelpaare 7.1-7.2 und 8.1-8.2 zusammengefaltet, wobei sich die Kniegelenke 7.5 und 8.5 auf Kreisbögen K1 und K2 zunächst nach innen bewegen. Diese Bewegung erfolgt gegen die Wirkung der Gasfeder 9. Es wird schließlich eine Stellung erreicht, die in Position 2 dargestellt ist, in der die Hebel 7.1 und 7.2, bzw. 8.1 und 8.2 in Richtung I ausgerichtet übereinander liegen und dementsprechend die Konsolenplattform 4" direkt unter dem Schlitten 3" angeordnet ist.

Beim weiteren Verschieben der Konsolenplattform 4" nach hinten bewegen sich die Kniegelenke 7.5' und 8.5' auf den Kreisbögen K1 und K2 wieder nach außen, wobei diese Bewegung durch die Wirkung der Gasfeder 9' unterstützt wird. Schließlich wird die Position 3 erreicht und in dieser rastet ein Vorsprung 4.2' an der Rückseite der Konsolenplattform 4' in eine Ausnehmung 10.1 einer basisfesten Falle 10 ein zur Festlegung der Zurrposition, in welche die Konsolenplattform 4' unter der Wirkung der Gasfeder 9' hineingedrückt wird.

Das Herausholen der Konsolenplattform 4' aus der Zurrposition erfolgt in umgekehrter Richtung von Fosition 3 bis Position 1.

Wie aus den Fig. 1 bis 3 einerseits und den Fig. 4 bis 6 andererseits leicht zu erkennen, werden nur wenige Handgriffe benötigt, die Konsolenplattform 4 mit dem Bildschirmgerät 1 einerseits zwischen der ersten und der zweiten Arbeitsposition vor den Bedienungsplätzen B1 und B2 hin und her zu schieben und andererseits, nachdem der Schlitten 3 in die Stellung gegenüber der Zurrposition 3' gefahren ist, über die Positionen 1, 2 und 3 in die Zurrposition und aus ihr herauszufahren.

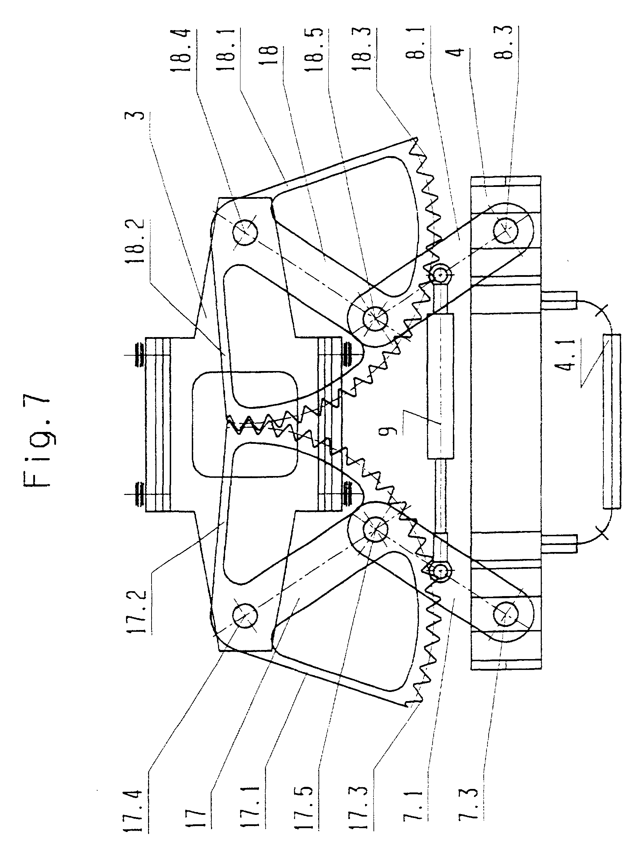

Bei der Bewegung der Konsolenplattform 4 in Richtung II ist infolge der Kinematik der Kniehebel eine zwangsläufig eintretende Geradführung nicht sichergestellt. Es kann daher zweckmäßig sein, hier eine zusätzliche Geradführungsvorrichtung vorzusehen, die diese zwangsläufige Geradführung sicherstellt. Wie dies durchgeführt werden kann, ist an einem Beispiel in Fig. 7 dargestellt. In Fig. 7 sind mit der Ausführungsform nach Fig. 1 bis 6 identische Teile mit den gleichen Bezugsziffern bezeichnet. Anstelle der Hebel 7.2 und 8.2 der Kniehebelpaare treten hier Hebel 17 und 18, die Teil von Zahnsegmenten sind, die die Form eines Kreisausschnitts besitzen und deren Umfang mindestens dem maximalen Schwenkwinkel der Hebel entspricht. Das den Hebel 17 enthaltende Zahnsegment besitzt Rippen 17.1 und 17.2, deren Enden einerseits mit dem inneren Ende des Hebels 17 und andererseits mit den Enden eines Zahnkranzes 17.3 verbunden sind. Der Drehpunkt dieses Zahnkranzes entspricht der Schwenkachse 17.4 des Hebels 17. Das den Hebel 18 enthaltende Zahnsegment besitzt entsprechend zwei Rippen 18.1 und 18.2, die einen Zahnkranz 13.3 verbinden. Die Zahnkränze 17.3 und 18.3 kämmen miteinander und der Hebel 17 ist über das Kniegelenk 17.5 mit dem Hebel 7.1 verbunden, während der Hebel 18 über das Kniegelenk 18.5 mit dem Hebel 8.1 verbunden ist. Es läßt sich aus Fig. 7 leicht ablesen, daß bei der Bewegung der Konsolenplattform 4 durch die Positionen 1 bis 3 gemäß Fig. 4 bis 5 eine Geradführung erreicht wird, indem die beiden Zahnkränze 17.3 und 18.3 aneinander ablaufen.

## Patentansprüche

1. Konsole zur Halterung eines Bildschirmgerätes (1) mit einer Linear-Laufrollenschiene (2), die an der Decke (D) eines Innenraumes befestigbar ist und in einer ersten horizontalen Richtung (I) verläuft und auf der ein Schlitten (3) geführt ist, wobei im Bereich unterhalb des Schlittens (3) eine Konsolenplattform (4) angeordnet ist, die mit dem Schlitten (3) über eine bewegliche Führungsvorrichtung (5) verbunden ist, wobei an der Konsolenplattform (4) um eine horizontale Achse schwenkbar ein Rahmen (6) zum Tragen des Bildschirmgerätes (1) aufgehängt ist, **dadurch gekennzeichnet, dass** die Führungsvorrichtung (5) derart ausgebildet ist, dass die Konsolenplattform (4) in einer zweiten horizontalen Richtung (II) orthogonal zur Richtung (I) der Linear-Laufrollenschiene (2) unter dem Schlitten (3) hinweg vor- und zurückverschiebbar ist, wodurch die Konsole für den Innenraum eines Kampffahrzeugs mit zwei nebeneinander angeordneten Bedienungsplätzen (B1, B2) geeignet ist, in deren Bereich das Bildschirmgerät (1) zur abwechselnden Bedienung zwischen den beiden Bedienungsplätzen (B1, B2) bewegbar ist.

2. Konsole nach Anspruch 1, **dadurch gekennzeichnet, daß** die Zurrposition des Bildschirmgerätes (1') in einer Nische (N) des Innenraums des Kampffahrzeugs angeordnet ist, in welche das Bildschirmgerät in der zweiten horizontalen Richtung (2) orthogonal zur Richtung (I) der Linear-Laufrollenschiene (2) zurückschiebbar ist.

3. Konsole nach Anspruch 1 oder 2, **dadurch gekennzeichnet, daß** die bewegliche Führungsvorrichtung (5) zwei Kniehebelpaare (7.1, 7.2, 8.1, 8.2) aufweist, die einander spiegelsymmetrisch gegenüberliegend zwischen Schlitten (3) und Konsolenplattform (4) derart angeordnet sind, daß ihre Gelenkachsen senkrecht zur durch die erste und zweite horizontale Richtung (I, II) aufgespannten Ebene stehen, wobei jeweils ein Hebel (7.1, 8.1) jedes Kniehebelpaares schwenkbar an der Konsolenplattform (4) und der andere Hebel (7.2, 8.2) schwenkbar am Schlitten (3) angeordnet ist, und das die beiden Hebel (7.1 und 7.2 bzw. 8.1 und 8.2) verbindende Kniegelenk (7.5, 8.5) frei bewegbar ist und die beiden Hebel (7.1, 7.2 bzw. 8.1, 8.2) jedes Kniehebelpaares in unterschiedlichen Ebenen liegen derart, daß sie übereinander sowie unter dem Schlitten (3) und über der Konsolenplattform (4) hinweggleiten können.

4. Konsole nach Anspruch 3, **dadurch gekennzeichnet, daß** ein Hebel (7.1) des einen Kniehebelpaares mit dem ihm entsprechenden Hebel (8.1) des anderen Kniehebelpaares über eine Gasfeder (9) verbunden ist.

5. Konsole nach Anspruch 4, **dadurch gekennzeichnet, daß** die beiden Endlagen der Konsolenplattform (4) in der zweiten horizontalen Richtung (II) durch die ausgefederte Gasfeder (9) definiert sind.

6. Konsole nach Anspruch 4 oder 5, **dadurch gekennzeichnet, daß** die Gasfeder (9) zwischen den beiden an der Konsolenplattform (4) angelenkten Hebeln (7.1, 8.1) jedes Kniehebelpaares angeordnet ist.

7. Konsole nach Anspruch 6, **dadurch gekennzeichnet, daß** die Konsolenplattform (4) an ihrer Oberseite eine Vertiefung (4.3) für den Durchtritt der Gasfeder (9) aufweist.

8. Konsole nach einem der Ansprüche 1 bis 7, **dadurch gekennzeichnet, daß** von den Bedienungsplätzen (B1, B2) aus gesehen, hinter der Linear-Laufrollenschiene (2) an mindestens einer vorgegebenen Stelle eine fahrzeugfeste Falle (10) angeordnet ist, in welche die Konsolenplattform (4, 4') in einer Zurrposition im zurückgeschobenen Zustand einrastet.

9. Konsole nach den Ansprüchen 4 und 8, **dadurch gekennzeichnet, daß** die Falle (10) eine Ausnehmung (10.1) besitzt, in welche ein Vorsprung (4.2') der Konsolenplattform (4') unter der Kraftwirkung der Gasfeder (9') einrastet.

10. Konsole nach einem der Ansprüche 1 bis 9, **dadurch gekennzeichnet, daß** die Arbeitspositionen der Konsolenplattform (4, 4"') an den Enden der Linear-Laufrollenschiene (2) liegen und zwischen diesen Arbeitspositionen eine Zurrposition der Konsolenplattform (4') angeordnet ist.

11. Konsole nach Anspruch 3 und gegebenenfalls einem der Ansprüche 4 bis 10, **gekennzeichnet durch**, eine Geradführungsvorrichtung für die Bewegung der Konsolenplattform (4) in der zweiten horizontalen Richtung (II), welche zwei jeweils mit den am Schlitten (3) angelenkten Hebeln (17, 18) fest verbundene miteinader kämmende Zahnsegmente (17.3, 18.3) in Form eines Kreisausschnitts aufweist, deren Umfang mindestens dem maximalen Schwenkwinkel dieser Hebel (17, 18) entspricht, deren Drehachsen jeweils mit den Schwenkachsen (17.4, 18.4) der beiden Hebel (17, 18) zusammenfallen und deren Radius dem halben Abstand der beiden Schwenkachsen (17.4, 18.4) voneinander entspricht.

12. Konsole nach Anspruch 11, **dadurch gekennzeichnet, daß** die beiden am Schlitten (3) angelenkten Hebel (17,18) in die Zahnsegmente (17.3, 18.3) integriert und auf der winkelhalbierenden ihres Umfangswinkels angeordnet sind.

## Claims

1. Bracket for mounting a visual display unit (1) comprising a linear roller track (2), which is fastenable to the ceiling (D) of an interior and extends in a first horizontal direction (I) and along which a slide (3) is conveyed, wherein disposed in the region below the slide (3) is a bracket platform (4), which is connected to the slide (3) by a movable guide apparatus (5), wherein a frame (6) for carrying the visual display unit (1) is suspended from the bracket platform (4) so as to be pivotable about a horizontal axis, **characterized in that** the guide apparatus (5) is designed in such a way that the bracket platform (4) is displaceable forward and back under and across the slide (3) in a second horizontal direction (II) orthogonally relative to the direction (I) of the linear roller track (2), with the result that the bracket is suitable for the interior of a combat vehicle having two operator locations (B1, B2) arranged side by side, in the region of which the visual display unit (1) for alternate operation is movable between the two operator locations (B1, B2).

2. Bracket according to claim 1, **characterized in that** the tie-down position of the visual display unit (1') is disposed in a niche (N) of the interior of the combat vehicle, into which niche the visual display unit is slidable back in the second horizontal direction (2) orthogonal to the direction (I) of the linear roller track (2).

3. Bracket according to claim 1 or 2, **characterized in that** the movable guide apparatus (5) comprises two toggle lever pairs (7.1, 7.2, 8.1, 8.2), which are disposed mirror-symmetrically opposite one another between slide (3) and bracket platform (4) in such a way that their joint axes are situated at right angles to the plane defined by the first and second horizontal direction (I, II), wherein in each case one lever (7.1, 8.1) of each toggle lever pair is pivotably disposed on the bracket platform (4) and the other lever (7.2, 8.2) is pivotably disposed on the slide (3), and the toggle joint (7.5, 8.5) connecting the two levers (7.1 and 7.2 and/or 8.1 and 8.2) is freely movable and the two levers (7.1, 7.2 and/or 8.1, 8.2) of each toggle lever pair lie in different planes in such a way that they may slide over one another as well as under the slide (3) and across the bracket platform (4).

4. Bracket according to claim 3, **characterized in that** one lever (7.1) of the one toggle lever pair is connected by a pneumatic spring (9) to the lever (8.1) of the other toggle lever pair corresponding thereto.

5. Bracket according to claim 4, **characterized in that** the two end positions of the bracket platform (4) in the second horizontal direction (II) are defined by the topped-out pneumatic spring (9).

6. Bracket according to claim 4 or 5, **characterized in that** the pneumatic spring (9) is disposed between the two levers (7.1, 8.1) of each toggle lever pair that are coupled to the bracket platform (4).

7. Bracket according to claim 6, **characterized in that** the bracket platform (4) has in it upper side an indentation (4.3) for passage of the pneumatic spring (9).

8. Bracket according to one of claims 1 to 7, **characterized in that**, viewed from the operator locations (B1, B2), there is disposed behind the linear roller track (2) at at least one preset point a vehicle-fixed trap (10), into which the bracket platform (4, 4') in the slid-back state latches in a tie-down position.

9. Bracket according to claims 4 and 8, **characterized in that** the trap (10) has a recess (10.1), into which a projection (4.2') of the bracket platform (4') latches under the action of force of the pneumatic spring (9').

10. Bracket according to one of claims 1 to 9, **characterized in that** the working positions of the bracket platform (4, 4"') lie at the ends of the linear roller track (2) and a tie-down position of the bracket platform (4') is disposed between said working positions.

11. Bracket according to claim 3 and optionally one of claims 4 to 10, **characterized by** a straight-line mechanism for the movement of the bracket platform (4) in the second horizontal direction (II), which mechanism comprises two intermeshing toothed segments (17.3, 18.3) in the shape of a sector of a circle, which are firmly connected in each case to the levers (17, 18) coupled to the slide (3) and of which the circumference corresponds at least to the maximum swivelling angle of said levers (17, 18), the axes of rotation coincide in each case with the swivelling axes (17.4, 18.4) of the two levers (17, 18) and the radius corresponds to half of the distance between the two swivelling axes (17.4, 18.4).

12. Bracket according to claim 11, **characterized in that** the two levers (17, 18) coupled to the slide (3) are integrated into the toothed segments (17.3, 18.3) and disposed on the line bisecting their angle at circumference.

## Revendications

1. Console de maintien d'un appareil formant écran (1), comportant un rail à rouleaux linéaire (2) qui est susceptible d'être fixé au plafond (D) d'un espace intérieur et qui s'étend dans une première direction horizontale (I) et sur lequel est guidé un chariot (3), une plate-forme de console (4) étant agencée dans la zone au-dessous du chariot (3), qui est reliée au chariot (3) via un dispositif de guidage mobile (5), un cadre (6) pour porter l'écran (1) étant suspendu sur la plate-forme de console (4) avec faculté de pivotement autour d'un axe horizontal, **caractérisée en ce que** le dispositif de guidage (5) est réalisé de telle sorte que la plate-forme de console (4) est mobile en translation vers l'avant et vers l'arrière au-dessous du chariot (3) dans une deuxième direction horizontale (II) orthogonale à la direction (I) du rail à rouleaux linéaire (2), ce pourquoi la console convient pour l'espace intérieur d'un véhicule de combat présentant deux places de manipulation (B1, B2) agencées l'une à côté de l'autre, dans la zone desquelles l'écran (1) est mobile entre les deux places de manipulation (B1, B2) pour une manipulation en alternance.

2. Console selon la revendication 1, **caractérisée en ce que** la position amarrée de l'écran (1') est prévue dans une niche (N) de l'espace intérieur du véhicule de combat, dans laquelle peut être rétracté l'écran dans la deuxième direction horizontale (II) orthogonale à la direction (I) du rail à rouleaux linéaire (2).

3. Console selon l'une ou l'autre des revendications 1 et 2, **caractérisée en ce que** le dispositif de guidage mobile (5) comprend deux paires de leviers à genouillère (7.1, 7.2, 8.1, 8.2) qui sont agencées à symétrie l'une en vis-à-vis de l'autre entre le chariot (3) et la plate-forme de console (4) de telle sorte que leurs axes d'articulation sont perpendiculaires au plan défini par la première et par la deuxième direction horizontale (I, II), un levier respectif (7.1, 8.1) de chaque paire de leviers à genouillère étant agencé mobile en pivotement sur la plate-forme de console (4) et l'autre levier (7.2, 8.2) étant agencé mobile en pivotement sur le chariot (3), et la genouillère (7.5, 8.5) reliant les deux leviers (7.1 et 7.2 ou 8.1 et 8.2) est librement mobile, et les deux leviers (7.1, 7.2 ou 8.1, 8.2) de chaque paire de leviers à genouillère sont situés dans des plans différents de manière à pouvoir glisser l'un au-dessus de l'autre ainsi qu'au-dessous du chariot (3) et au-delà de la plate-forme de console (4).

4. Console selon la revendication 3, **caractérisée en ce qu'**un levier (7.1) de l'une des paires de leviers à genouillère est relié au levier (8.1) qui lui correspond de l'autre paire de leviers à genouillère via un ressort à gaz (9).

5. Console selon la revendication 4, **caractérisée en ce que** les deux positions finales de la plate-forme de console (4) dans la deuxième direction horizontale (II) sont définies par le ressort à gaz déployé (9).

6. Console selon l'une ou l'autre des revendications 4 et 5, **caractérisée en ce que** le ressort à gaz (9) est agencé entre les deux leviers (7.1, 8.1) de chaque paire de leviers à genouillère articulés sur la plate-forme de console (4).

7. Console selon la revendication 6, **caractérisée en ce que** la plate-forme de console (4) présente sur sa face supérieure un renfoncement (4.3) pour le passage du ressort à gaz (9).

8. Console selon l'une des revendications 1 à 7, **caractérisée en ce qu'**il est prévu en arrière du rail à rouleaux linéaire (2), vu depuis les places de manipulation (B1, B2), une trappe (10) solidaire du véhicule et agencée à au moins un emplacement prédéterminé, dans laquelle vient s'enclencher la plate-forme de console (4, 4') dans l'état rétracté dans une position amarrée.

9. Console selon les revendications 4 et 8, **caractérisée en ce que** la trappe (10) possède un évidement (10.1) dans lequel s'enclenche une saillie (4.2') de la plate-forme de console (4') sous l'effet de la force du ressort à gaz (9').

10. Console selon l'une des revendications 1 à 9, **caractérisée en ce que** les positions de travail de la plate-forme de console (4, 4"') se trouvent aux extrémités du rail à rouleaux linéaire (2), et **en ce qu'**une position amarrée de la plate-forme de console (4') est agencée entre ces positions de travail.

11. Console selon la revendication 3 et le cas échéant selon l'une des revendications 4 à 10, **caractérisée par** un dispositif de guidage rectiligne pour le mouvement de la plate-forme de console (4) dans la deuxième direction horizontale (II), qui comprend deux segments dentés (17.3, 18.3) sous forme de secteur circulaire qui sont chacun fermement reliés aux leviers (17, 18) articulés sur le chariot (3), qui engrènent l'un avec l'autre et dont le périmètre correspond au moins à l'angle de pivotement maximal de ces leviers (17, 18), dont les axes de rotation coïncident respectivement avec les axes de pivotement (17.4, 18.4) des deux leviers (17, 18) et dont le rayon correspond à la moitié de la distance des deux axes de pivotement (17.4, 18.4).

12. Console selon la revendication 11, **caractérisée en ce que** les deux leviers (17, 18) articulés sur le levier (3) sont intégrés dans les segments dentés (17.3, 18.3) et agencés sur la bissectrice de leur angle circonférentiel.
